Europäisches Patentamt

European Patent Office

Office européen des brevets

(19)

(11) **EP 0 756 180 B1**

(12) **FASCICULE DE BREVET EUROPEEN**

(45) Date de publication et mention
de la délivrance du brevet:
**04.10.2001 Bulletin 2001/40**

(51) Int Cl.⁷: **G01S 3/42**, H01Q 3/08

(21) Numéro de dépôt: **96401621.6**

(22) Date de dépôt: **19.07.1996**

(54) **Procédé de commande d'un positionneur d'antenne pour satellite à défilement**

Verfahren zur Steuerung einer Antennestellantrieb für umlaufenden Satellit

Method to control an antenna positioner for an orbiting satellite

(84) Etats contractants désignés:
**DE ES GB IT SE**

(30) Priorité: **24.07.1995 FR 9508950**

(43) Date de publication de la demande:
**29.01.1997 Bulletin 1997/05**

(73) Titulaire: **ALCATEL**
**75382 Paris Cédex 08 (FR)**

(72) Inventeur: **Bourgeois, Alain**
**95600 Eaubonne (FR)**

(74) Mandataire:
**Pothet, Jean Rémy Emile Ludovic et al**
**ALCATEL ALSTHOM,**
**Département de Propriété Industrielle,**
**30, avenue Kléber**
**75116 Paris (FR)**

(56) Documents cités:
**EP-A- 0 246 635**

**Description**

Le domaine de l'invention est celui des antennes utilisées dans les transmissions par satellite à défilement et concerne plus précisément un procédé de commande d'un positionneur d'une telle antenne.

Les satellites à défilement, tel que par exemple les satellites du projet Globalstar (nom protégé), décrivent différentes orbites dans l'espace pour assurer une couverture entière de la terre (8 orbites dans le cas de Globalstar). Au sol, les antennes de réception doivent pouvoir suivre ces différentes évolutions et notamment dans le cas du passage d'un satellite au zénith d'une antenne. Dans ce cas, l'antenne, généralement de type parabolique, doit être dirigée à la verticale du lieu pour assurer une continuité de liaison.

Les antennes montées sur des positionneurs à 2 axes, un axe azimut et un axe élévation (monture Az-El), ne permettent pas d'assurer une liaison continue en cas de passage au zénith car l'axe azimut doit dans ce cas effectuer une rotation de 180° en un temps théoriquement nul lorsque le satellite passe au zénith de l'antenne. Des positionneurs 3 axes ont donc été développés pour répondre à ce problème de passage au zénith. On peut par exemple se référer au brevet européen n°0.246.635 au nom de NEC Corporation. Ce brevet décrit une antenne de poursuite pour satellite à défilement, l'antenne étant montée sur un positionneur à trois axes comprenant :

- un axe azimut ;
- un axe élévation monté perpendiculairement sur l'axe azimut ;
- un axe de pseudo-azimut monté perpendiculairement sur l'axe élévation et supportant l'antenne.

Les positions de ces trois axes sont commandées par une unité de pointage et le procédé de poursuite mis en oeuvre consiste à effectuer simultanément les étapes suivantes lorsque la position du satellite est telle que l'axe élévation dépasse une valeur d'élévation prédéterminée :

-a- modifier la position de l'axe azimut à une vitesse constante ;
-b- modifier la position de l'axe élévation et de l'axe de pseudo-azimut pour suivre le satellite.

Les étapes -a- et -b- sont menées de sorte que le satellite soit suivi de manière continue tant qu'il demeure dans un cône de révolution centré sur le zénith, c'est à dire tant que l'élévation est supérieure à une valeur donnée.

L'inconvénient de ce procédé de poursuite est que la poursuite est assurée par des moyens de mesure du niveau du signal émis par le satellite. Des signaux d'erreur sont élaborés pour assurer un suivi fin et il s'en suit que les moyens destinés à assurer la poursuite sont lourds à mettre en oeuvre et coûteux. De plus, la précision de la poursuite dépend de la fiabilité des signaux d'erreur.

Par ailleurs, le satellite poursuivi n'est pas nécessairement en train d'émettre pendant que l'on cherche à assurer le pointage de l'antenne et notamment pendant le passage au zénith ou tout du moins dans le cône de révolution. Dans ce cas, la poursuite n'est pas possible.

La présente invention a notamment pour objectif de pallier ces inconvénients.

Plus précisément, un des objectifs de l'invention est de fournir un procédé de pointage d'une antenne de poursuite pour satellite à défilement, cette antenne étant montée sur un positionneur à trois axes commandé, lors d'un passage du satellite dans un cône de révolution centré sur le zénith, sans utilisation de signaux d'erreur.

Cet objectif, ainsi que d'autres qui apparaîtront par la suite, est atteint grâce au fait que les modifications de position des axes élévation et pseudo-azimut sont réalisées en mettant en oeuvre les relations suivantes :

$$X' = - \text{Arctg} \frac{\text{tg} [El(t)]}{\cos[Az(t) - Az^*(t)]}$$

$$Y' = \text{Arcsin} [\cos El(t).\sin(Az(t)-Az^*(t))]$$

où X' et Y' sont respectivement les positions de l'axe élévation et de l'axe de pseudo-azimut, Az(t) et El(t) sont respectivement les coordonnées azimut et élévation du satellite par rapport à l'antenne en fonction du temps, ti est l'instant où la position initiale du satellite est telle que l'axe élévation dépasse une valeur d'élévation prédéterminée, les coordonnées Az(t) et El(t) étant obtenues à partir de tables d'éphémérides, Az*(t) étant égal à Az(ti) + $V_{Az}$.(t-ti) et $V_{Az}$ étant la vitesse de rotation de l'axe azimut.

L'utilisation de tables d'éphémérides pour assurer le pointage de l'antenne sur un satellite défilant permet d'obtenir un pointage précis, même en l'absence de continuité de transmission.

Dans une variante de réalisation, Az*(t) est la position réelle de l'axe azimut, donnée par exemple par un codeur azimut. Ceci permet de tenir compte des accélérations et décélérations auxquelles est soumis l'axe azimut.

D'autres caractéristiques et avantages de l'invention apparaîtront à la lecture de la description suivante d'un mode de mise en oeuvre préférentiel, donné à titre illustratif et non limitatif, et des dessins annexés, dans lesquels :

- les figures 1 et 2 sont respectivement des vues de face et de côté d'un positionneur 3 axes tel qu'il existe dans l'état de la technique ;
- la figure 3 représente schématiquement les articulations d'un tel positionneur à 3 axes ;
- la figure 4 est un organigramme illustrant le procédé selon l'invention ;
- la figure 5 est un tableau montrant les positions des axes d'élévation et de pseudo-azimut en fonction des coordonnées d'un satellite effectuant un passage au zénith d'une antenne dont le positionneur est commandé selon le procédé de l'invention.

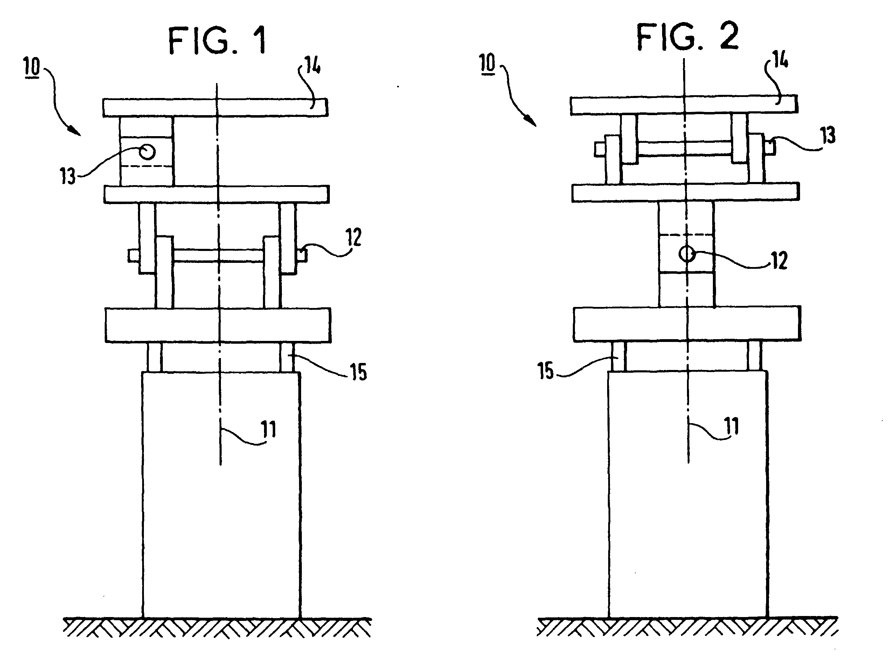

Les figures 1 et 2 sont respectivement des vues de face et de côté d'un positionneur 3 axes tel qu'il existe dans l'état de la technique. Les éléments identiques portent les mêmes références numériques.

Un positionneur d'antenne, généralement référencé par 10, est structuré autour de 3 axes : un axe azimut 11, un axe élévation 12 et un axe de pseudo-azimut 13. L'antenne, non représentée, est destinée à être montée sur un support d'antenne 14 monté sur l'axe de pseudo-azimut 13.

L'axe élévation 12 est perpendiculaire à l'axe azimut 11 et l'axe de pseudo-azimut 13 est perpendiculaire à l'axe élévation 12. Les mouvements autour de ces trois axes sont commandés (par une unité de pointage non représentée), pour l'axe azimut 11, par un roulement 15 constitué par une couronne dentée animée par un pignon et par des crémaillères ou vérins, tel que décrit dans le brevet précité, pour les axes élévation 12 et pseudo-azimut 13.

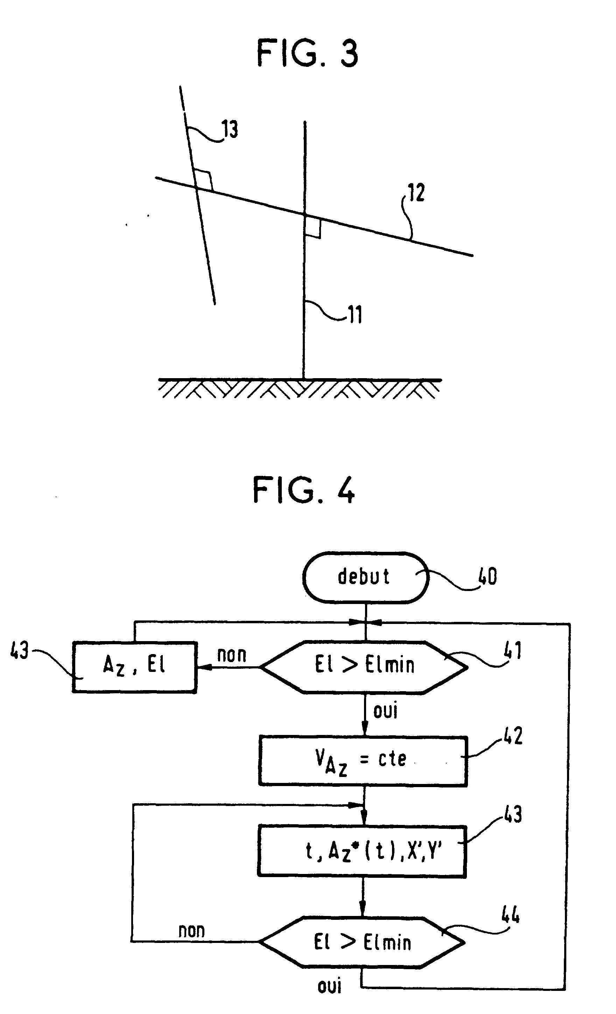

La figure 3 représente schématiquement les articulations d'un tel positionneur à 3 axes. Les axes azimut, élévation et pseudo-azimut sont référencés respectivement 11, 12 et 13. L'axe azimut est à la verticale locale et l'axe élévation à l'horizontale locale.

La figure 4 est un organigramme illustrant le procédé selon l'invention.

Dans cet organigramme, l'étape 40 est une étape de début. L'étape de test 41 consiste à déterminer si l'angle d'élévation est supérieur à une valeur donnée. Cette valeur est par exemple égale à 80° par rapport à l'horizontale du lieu géographique où est installée l'antenne. Si la réponse est positive, cela signifie que le satellite va passer dans un cône de révolution centré sur le zénith et d'angle d'ouverture de 20° (2 x (90 - 80)). L'étape suivante sera alors l'étape 42. Si la réponse est négative, l'étape 43 consiste à commander la position de l'antenne selon une monture Az-El classique, c'est à dire que le mouvement autour de l'axe pseudo-azimut est nul. Cette commande s'effectue à partir de tables d'éphémérides, comme il sera vu par la suite.

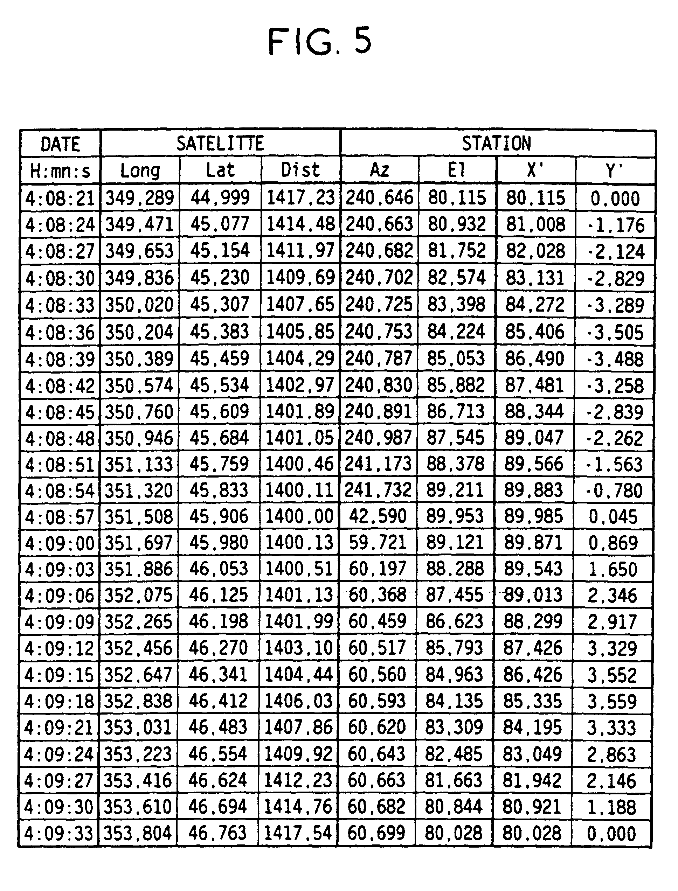

Sur la figure 5, qui est un tableau montrant les positions des axes d'élévation et de pseudo-azimut en fonction des coordonnées d'un satellite effectuant un passage au zénith d'une antenne dont le positionneur est commandé selon le procédé de l'invention, figurent des dates auxquelles un satellite à défilement entrera effectivement dans ce cône. Les données suivantes sont ici considérées : l'antenne est située à une longitude de 351,5° (LONG) et à une latitude de 45,9° (LAT), le satellite est à une altitude de 1400 km et l'inclinaison de son orbite est de 52° par rapport à l'équateur. Le pas temporel est de 3 secondes. Au jour considéré, à 4 heures 8 minutes et 21 secondes, les éphémérides indiquent que le satellite sera situé à une longitude de 349,289°, à une latitude de 44,999° et éloigné de 1417,23 km.

Les colonnes Az et El correspondent aux coordonnées de ce satellite vues de la station au sol et donc également à une structure de positionneur de type Az-El classique, c'est à dire sans axe de pseudo-azimut. On constate qu'entre 4 heures 8 minutes 54 secondes et quatre heures 8 minutes et 57 secondes, l'axe azimut doit effectuer une rotation d'environ 180°, soit à une vitesse de 60° par seconde (l'axe élévation El est quasiment à 90°). Ceci est impossible vu la masse présentée par l'antenne et le positionneur, comme précisé lors de la présentation de l'état de la technique.

C'est pourquoi, l'axe azimut est entraîné en rotation à vitesse constante entre les instants d'entrée et de sortie du satellite du cône mentionné précédemment. La vitesse de rotation de l'axe azimut est calculée à l'étape 42 selon la relation suivante :

$$V_{Az} = \frac{Az_f - Az_i}{t_f - t_i}$$

où $Az_f$ correspond à l'azimut final où le satellite sort du cône de révolution, $Az_i$ correspond à l'azimut initial où le satellite entre dans ce cône, $t_f$ correspond à l'instant de l'azimut final et $t_i$ correspond à l'instant d'azimut initial. A titre d'exemple, en référence au tableau de la figure 5, on a :

$$V_{Az} = \frac{(360) + 60{,}699 - 240{,}646}{4{:}09{:}33 - 4{:}08{:}21} = \frac{180{,}053°}{72s} = 2{,}50073°/s$$

Ainsi, entre les temps $t_i$ et $t_f$, l'axe azimut est animé d'une rotation à une vitesse constante de 2,50073°/s.

A l'étape 43, les positions des axes élévation et de pseudo-azimut sont modifiées pour suivre le satellite selon les relations suivantes :

$$X' = - \text{Arctg} \frac{\text{tg } [El(t)]}{\cos[Az(t) - Az^*(t)]}$$

$$Y' = \text{Arcsin } [\cos El(t).\sin(Az(t)-Az^*(t))]$$

où X' et Y' sont respectivement les positions des axes élévation et de pseudo-azimut, Az(t) et El(t) sont respectivement les coordonnées azimut et élévation du satellite par rapport à l'antenne en fonction du temps (colonnes Az et El), les coordonnées Az(t) et El(t) étant également obtenues à partir de tables d'éphémérides. Az*(t) est égal à Az $(t_i) + V_{Az}.(t-t_i)$.

Ces relations permettent de suivre de manière précise l'évolution du satellite passant dans le cône de révolution. Lorsque le satellite sort du cône, la position de l'axe azimut est celle pour laquelle une poursuite en mode Az-El classique est possible.

Les colonnes X' et Y' du tableau de la figure 5 donnent les positions en degré des axes élévation et de pseudo-azimut. On constate qu'il n'y a plus de discontinuité brutale du pointage

A l'étape 44, il est testé si le satellite est sorti du cône de révolution. Ce test peut par exemple consister à comparer l'heure courante avec l'heure prévue de sortie du satellite du cône de 20° d'ouverture. Si la réponse est non, la commande de rotation des trois axes se poursuit. Si la réponse est oui, le procédé reprend à l'étape 41.

La valeur d'élévation prédéterminée à partir de laquelle les trois axes sont mis en mouvement est préférentiellement de 80°, ce qui correspond à un cône de révolution d'ouverture de 20°. Cette valeur est compatible avec les antennes de poursuite utilisées habituellement pour les transmissions d'images par satellites militaires. De manière générale, l'ouverture du cône considéré est fonction de la vitesse maximale de rotation de l'axe azimut et peut varier en fonction de l'altitude du satellite.

Un des avantages de l'invention est que l'axe élévation est seulement commandé sur 90° et il n'est donc pas nécessaire d'utiliser des crémaillères de commande d'élévation permettant une rotation de 180°. La structure du positionneur s'en trouve ainsi simplifiée.

A titre de variante, la valeur de Az*(t) n'est pas celle définie précédemment mais est celle lue sur le codeur azimut à l'instant t. Le codeur azimut est par exemple constitué par un détecteur de position et fournit la valeur azimut réelle à l'instant t considéré. On peut ainsi tenir compte de l'accélération et de la décélération du moyen d'entraînement de l'axe azimut (par exemple constitué par un moteur) et augmenter la précision de poursuite du satellite.

**Revendications**

1. Procédé de pointage d'une antenne de poursuite pour satellite à défilement, ladite antenne étant montée sur un positionneur à trois axes comprenant :

   - un axe azimut (11) ;
   - un axe élévation (12) monté perpendiculairement sur ledit axe azimut (11) ;
   - un axe de pseudo-azimut (13) monté perpendiculairement sur ledit axe élévation (12) et supportant ladite antenne,

   les positions desdits axes (11, 12, 13) étant commandées par une unité de pointage, ledit procédé consistant à effectuer simultanément les étapes suivantes lorsque la position dudit satellite est telle que ledit axe élévation (12) dépasse une valeur d'élévation prédéterminée :

   -a-    modifier la position dudit axe azimut (11) à une vitesse constante ;
   -b-    modifier la position dudit axe élévation (12) et dudit axe de pseudo-azimut (13) pour suivre ledit satellite,

   **caractérisé en ce que** l'étape -b- consiste à mettre en oeuvre les relations suivantes :

$$X' = - \text{Arctg} \frac{\text{tg } [El(t)]}{\cos[Az(t) - Az^*(t)]}$$

$$Y' = \text{Arcsin } [\cos El(t).\sin(Az(t)-Az^*(t))]$$

où X' et Y' sont respectivement les positions dudit axe élévation (12) et dudit axe de pseudo-azimut (13), Az(t) et El(t) sont respectivement les coordonnées azimut et élévation dudit satellite par rapport à ladite antenne, ti est l'instant où la position initiale dudit satellite est telle que ledit axe élévation (12) dépasse une valeur d'élévation prédéterminée, les coordonnées Az(t) et El(t) étant obtenues à partir de tables d'éphémérides, Az*(t) étant égal à Az(ti) + $V_{Az}$.(t-ti) et $V_{Az}$ étant la vitesse de rotation dudit axe azimut (11).

2. Procédé de pointage d'une antenne de poursuite pour satellite à défilement, ladite antenne étant montée sur un positionneur à trois axes comprenant :

- un axe azimut (11) ;
- un axe élévation (12) monté perpendiculairement sur ledit axe azimut (11) ;
- un axe de pseudo-azimut (13) monté perpendiculairement sur ledit axe élévation (12) et supportant ladite antenne,

les positions desdits axes (11, 12, 13) étant commandées par une unité de pointage, ledit procédé consistant à effectuer simultanément les étapes suivantes lorsque la position dudit satellite est telle que ledit axe élévation (12) dépasse une valeur d'élévation prédéterminée :

-a- modifier la position dudit axe azimut (11) à une vitesse constante ;
-b- modifier la position dudit axe élévation (12) et dudit axe de pseudo-azimut (13) pour suivre ledit satellite,

**caractérisé en ce que** l'étape -b- consiste à mettre en oeuvre les relations suivantes :

$$X' = -\text{ Arctg } \frac{\text{tg } [El(t)]}{\cos[Az(t) - Az^*(t)]}$$

$$Y' = \text{Arcsin } [\cos El(t).\sin(Az(t)-Az^*(t))]$$

où X' et Y' sont respectivement les positions dudit axe élévation (12) et dudit axe de pseudo-azimut (13), Az(t) et El(t) sont respectivement les coordonnées azimut et élévation dudit satellite par rapport à ladite antenne, ti est l'instant où la position initiale dudit satellite est telle que ledit axe élévation (12) dépasse une valeur d'élévation prédéterminée, les coordonnées Az(t) et El(t) étant obtenues à partir de tables d'éphémérides, Az*(t) étant la position réelle en fonction du temps dudit axe azimut (11).

3. Procédé selon l'une des revendications 1 et 2, **caractérisé en ce que** ladite valeur d'élévation prédéterminée est de 80°.

**Patentansprüche**

1. Verfahren zum Richten einer Verfolgungsantenne für einen vorbeilaufenden Satelliten, wobei die Antenne Positioniereinrichtung mit drei Achsen angebracht ist, die umfasst:

- eine Azimutachse (11);
- eine Höhenachse (12), die senkrecht zur Azimutachse (11) angebracht ist;
- eine Pseudoazimutachse (13), die senkrecht zur Höhenachse (12) angebracht ist und die Antenne trägt; wobei die Positionen der Achsen (11, 12, 13) von einer Richteinheit gesteuert werden, wobei das Verfahren darin besteht gleichzeitig die folgenden Schritte auszuführen, wenn die Position des Satelliten derart ist, dass die Höhenachse (12) einen vorher bestimmten Wert übersteigt:

-a- Modifizieren der Position der Azimutachse (11) mit einer konstanten Geschwindigkeit;
-b- Modifizieren der Position der Höhenachse (12) und der Pseudoazimutachse (13), um dem Satelliten zu filden,

**dadurch gekennzeichnet, dass** der Schritt -b- darin besteht die folgenden Beziehungen anzuwenden:

$$X' = - \text{Arctg} \frac{\text{tg } [El(t)]}{\cos[Az(t) - Az^*(t)]}$$

$$Y' = \text{Arcsin } [\cos El(t).\sin(Az(t)-Az^*(t))]$$

worin X' und Y' die Positionen der Höchenachse (12) bzw. der Pseudoazimutachse (13) sind, Az(t) und El(t) die Azimut- bzw. Höhenkoordinaten des Satelliten in bezug auf die Antenne sind, ti der Zeitpunkt ist, zu dem die Anfangsposition des Satelliten so ist, **dass** die Höhenachse (12) einen vorher bestimmten Höhenwert überschreitet, wobei die Koordinaten Az(t) und El(t) ausgehend von Ephemeridentabellen erhalten werden, wobei Az*(t) gleich Az(ti) + $V_{Az}$, (t-ti) ist und $V_{Az}$ die Drehgeschwindigkeit der Azimutachse (11) ist.

2. Verfahren zum Richten einer Verfolgungsantenne für einen vorbeilaufenden Satelliten, wobei die Antenne Positioniereinrichtung mit drei Achsen angebracht ist, die umfasst:

   - eine Azimutachse (11);
   - eine Höhenachse (12), die senkrecht zur Azimutachse (11) angebracht ist;
   - eine Pseudoazimutachse (13), die senkrecht zur Höhenachse (12) angebracht ist und die Antenne trägt; wobei die Positionen der Achsen (11, 12, 13) von einer Richteinheit gesteuert werden, wobei das Verfahren darin besteht gleichzeitig die folgenden Schritte auszuführen, wenn die Position des Satelliten derart ist, dass die Höhenachse (12) einen vorher bestimmten Wert übersteigt:

   -a- Modifizieren der Position der Azimutachse (11) mit einer konstanten Geschwindigkeit;
   -b- Modifizieren der Position der Höhenachse (12) und der Pseudoazimutachse (13), um dem Satelliten zu filden,

   **dadurch gekennzeichnet, dass** der Schritt -b- darin besteht die folgenden Beziehungen anzuwenden:

$$X' = - \text{Arctg} \frac{\text{tg } [El(t)]}{\cos[Az(t) - Az^*(t)]}$$

$$Y' = \text{Arcsin } [\cos El(t).\sin(Az(t)-Az^*(t))]$$

   worin X' und Y' die Positionen der Höchenachse (12) bzw. der Pseudoazimutachse (13) sind, Az(t) und El(t) die Azimut- bzw. Höhenkoordinaten des Satelliten in bezug auf die Antenne sind, ti der Zeitpunkt ist, zu dem die Anfangsposition des Satelliten so ist, **dass** die Höhenachse (12) einen vorher bestimmten Höhenwert überschreitet, wobei die Koordinaten Az(t) und El(t) ausgehend von Ephemeridentabellen erhalten werden, wobei Az*(t) die wirkliche Position der Azimutachse (11) in Abhängigkeit von der Zeit ist.

3. Verfahren nach einem der Ansprüche 1 bis 2, **dadurch gekennzeichnet, dass** der vorher bestimmte Höhenwert 80° beträgt.

## Claims

1. Method of pointing σ tracking antenna for non-geostationary satellites, said antenna being mounted on a three-axis positioner comprising:

   - an azimuth axis (11);
   - an elevation axis (12) mounted perpendicularly on said azimuth axis (11);
   - a pseudo-azimuth axis (13) mounted perpendicularly on said elevation axis (12) and supporting said antenna,

   the positions of said axes (11, 12, 13) being controlled by a pointing unit, said method consisting in carrying out the following steps simultaneously when the position of said satellite is such that said elevation axis (12) exceeds a predetermined elevation value:

-a- modifying the position of said azimuth axis (11) at constant speed;

-b- modifying the position of said elevation axis (12) and said pseudo-azimuth axis (13) to track said satellite,

**characterized in that** step -b- consists in utilizing the following equations:

$$X' = - \text{Arctan} \frac{\tan[El(t)]}{\cos[Az(t)-Az^*(t)]}$$

$$Y' = \text{Arcsin} [\cos El(t).\sin(Az(t)-Az^*(t))]$$

in which X' and Y' are respectively the positions of said elevation axis (12) and of said pseudo-ozimuth axis (13), Az(t) and El(t) ore respectively the azimuth and elevation coordinates of said satellite relative to said antenna, ti is the time at which the initial position of said satellite is such that said elevation axis (12) exceeds a predetermined elevation angle, the coordinates Az(t) and El(t) being obtained from ephemeris tables, Az*(t) being equal to Az(ti) + $V_{Az}$.(t-ti) and $V_{Az}$ being the rotation speed of said azimuth axis (11).

2. Method of pointing a tracking antenna for non-geostationary satellites, sold antenna being mounted on a three-axis positioner comprising:

- an azimuth axis (11);
- an elevation axis (12) mounted perpendicularly on said azimuth axis (11);
- a pseudo-azimuth axis (13) mounted perpendicularly on said elevation axis (12) and supporting said antenna,

the positions of said axes (11, 12, 13) being controlled by a pointing unit, said method consisting in carrying out the following steps simultaneously when the position of said satellite is such that said elevation axis (12) exceeds a predetermined elevation value:

-a- modifying the position of said azimuth axis (11) at constant speed;

-b- modifying the position of said elevation axis (12) and said pseudo-azimuth axis (13) to track said satellite,

**characterized in that** step -b- consists in utilizing the following equations:

$$X' = - \text{Arctan} \frac{\tan[El(t)]}{\cos[Az(t)-Az^*(t)]}$$

$$Y' = \text{Arcsin} [\cos El(t).\sin(Az(t)-Az^*(t))]$$

in which X' and Y' are respectively the positions of said elevation axis (12) and of said pseudo-azimuth axis (13), Az(t) and El(t) ore respectively the azimuth and elevation coordinates of said satellite relative to said antenna, ti is the time at which the initial position of said satellite is such that said elevation axis (12) exceeds a predetermined elevation angle, the coordinates Az(t) and El(t) being obtained from ephemeris fables, Az*(t) being the real position as a function of time of said azimuth axis (11).

3. Method according to either claim 1 or claim 2, **characterized in that** said predetermined elevation value is 80°.

# FIG. 1

# FIG. 2

EP 0 756 180 B1

# FIG. 3

# FIG. 4

# FIG. 5

| DATE | SATELITTE | | | STATION | | | |
|---|---|---|---|---|---|---|---|
| H:mn:s | Long | Lat | Dist | Az | El | X' | Y' |
| 4:08:21 | 349.289 | 44.999 | 1417.23 | 240.646 | 80.115 | 80.115 | 0.000 |
| 4:08:24 | 349.471 | 45.077 | 1414.48 | 240.663 | 80.932 | 81.008 | -1.176 |
| 4:08:27 | 349.653 | 45.154 | 1411.97 | 240.682 | 81.752 | 82.028 | -2.124 |
| 4:08:30 | 349.836 | 45.230 | 1409.69 | 240.702 | 82.574 | 83.131 | -2.829 |
| 4:08:33 | 350.020 | 45.307 | 1407.65 | 240.725 | 83.398 | 84.272 | -3.289 |
| 4:08:36 | 350.204 | 45.383 | 1405.85 | 240.753 | 84.224 | 85.406 | -3.505 |
| 4:08:39 | 350.389 | 45.459 | 1404.29 | 240.787 | 85.053 | 86.490 | -3.488 |
| 4:08:42 | 350.574 | 45.534 | 1402.97 | 240.830 | 85.882 | 87.481 | -3.258 |
| 4:08:45 | 350.760 | 45.609 | 1401.89 | 240.891 | 86.713 | 88.344 | -2.839 |
| 4:08:48 | 350.946 | 45.684 | 1401.05 | 240.987 | 87.545 | 89.047 | -2.262 |
| 4:08:51 | 351.133 | 45.759 | 1400.46 | 241.173 | 88.378 | 89.566 | -1.563 |
| 4:08:54 | 351.320 | 45.833 | 1400.11 | 241.732 | 89.211 | 89.883 | -0.780 |
| 4:08:57 | 351.508 | 45.906 | 1400.00 | 42.590 | 89.953 | 89.985 | 0.045 |
| 4:09:00 | 351.697 | 45.980 | 1400.13 | 59.721 | 89.121 | 89.871 | 0.869 |
| 4:09:03 | 351.886 | 46.053 | 1400.51 | 60.197 | 88.288 | 89.543 | 1.650 |
| 4:09:06 | 352.075 | 46.125 | 1401.13 | 60.368 | 87.455 | 89.013 | 2.346 |
| 4:09:09 | 352.265 | 46.198 | 1401.99 | 60.459 | 86.623 | 88.299 | 2.917 |
| 4:09:12 | 352.456 | 46.270 | 1403.10 | 60.517 | 85.793 | 87.426 | 3.329 |
| 4:09:15 | 352.647 | 46.341 | 1404.44 | 60.560 | 84.963 | 86.426 | 3.552 |
| 4:09:18 | 352.838 | 46.412 | 1406.03 | 60.593 | 84.135 | 85.335 | 3.559 |
| 4:09:21 | 353.031 | 46.483 | 1407.86 | 60.620 | 83.309 | 84.195 | 3.333 |
| 4:09:24 | 353.223 | 46.554 | 1409.92 | 60.643 | 82.485 | 83.049 | 2.863 |
| 4:09:27 | 353.416 | 46.624 | 1412.23 | 60.663 | 81.663 | 81.942 | 2.146 |
| 4:09:30 | 353.610 | 46.694 | 1414.76 | 60.682 | 80.844 | 80.921 | 1.188 |
| 4:09:33 | 353.804 | 46.763 | 1417.54 | 60.699 | 80.028 | 80.028 | 0.000 |